# FASCICULE DE BREVET EUROPEEN

(11) **EP 3 561 267 B1**
(45) Date de publication et mention de la délivrance du brevet: **16.02.2022**
(21) Numéro de dépôt: 19171453.4
(22) Date de dépôt: 26.04.2019
(51) Int. Cl.: F02C 7/36, F16H 57/08

(54) **PROCEDE D'ASSEMBLAGE POUR UN TRAIN D'ENGRENAGES**
VERFAHREN ZUM ZUSAMMENBAU EINES GETRIEBES
METHOD FOR ASSEMBLING A TRANSMISSION

(30) Priorité: 26.04.2018 FR 1853650
(43) Date de publication de la demande: 30.10.2019
(73) Titulaire: Safran Transmission Systems, 92700 Colombes (FR)
(72) Inventeur: SIMON, Adrien, Louis, 77550 MOISSY-CRAMAYEL (FR); NIEPCERON, Clément, Paul, René, 77550 MOISSY-CRAMAYEL (FR)
(74) Mandataire: Ernest Gutmann - Yves Plasseraud S.A.S.

(56) Documents cités:
- FR-A1- 2 914 719
- US-A1- 2010 056 321
- US-A1- 2013 251 511

## Description

### DOMAINE

La présente invention concerne un procédé d'assemblage pour un train d'engrenages épicycloïdal ou planétaire destiné à équiper une turbomachine, telle que par exemple un turboréacteur ou un turbopropulseur d'avion, et un train d'engrenages épicycloïdal.

### CONTEXTE

Une turbomachine peut comprendre un train d'engrenages effectuant la liaison entre son arbre de turbine et un ou plusieurs éléments de sortie, tel par exemple qu'une soufflante. Ce type de train d'engrenages comprend un planétaire interne entraîné par un arbre d'entrée, par exemple un arbre de turbine, un planétaire externe (également appelé couronne), coaxial au planétaire interne, des satellites engrenant à la fois avec le planétaire interne et avec le planétaire externe, et un porte-satellites sur lequel les satellites sont montés rotatifs. Les satellites sont montés de façon mobile en rotation sur des pivots qui sont insérés dans les alésages du porte-satellites.

Dans une configuration particulière, le train d'engrenages peut effectuer une réduction de la vitesse entre une entrée et une sortie de celui-ci. La variation du rapport de réduction d'un tel train d'engrenages s'obtient par la modification du nombre de dents du planétaire interne, des satellites et du planétaire externe, et par l'architecture du réducteur, c'est-à-dire épicycloïdal ou planétaire. Ces deux types de trains d'engrenages se distinguent l'un de l'autre par le fait que dans le train d'engrenages dit épicycloïdal, la couronne est fixe et le porte-satellites est libre en rotation. A l'inverse, dans le train d'engrenages dit planétaire, le porte-satellites est fixe et le planétaire externe est libre en rotation.

Un exemple de porte-satellites est décrit dans US2010/56321A1.

Il est observé, dans le cas de ces deux types de trains d'engrenages, une disparité au niveau de la puissance transitant par les satellites du porte-satellites. Cette disparité peut résulter en une surcharge des contraintes mécaniques appliquées à certains satellites.

Selon la norme ANSI/AGMA 6123-B06 établie par l'AGMA (acronyme anglais pour *American Gear Manufacturers Association,* l'association des fabricants américains d'engrenages), la surcharge de chacun des satellites d'un train épicycloïdal ou planétaire doit être d'environ12%, en conditions réelles de fonctionnement.

L'une des causes de cette disparité est le défaut de positionnement relatif des satellites, et en particulier les défauts de positionnement tangentiel relatif des satellites les uns par rapport aux autres autour de l'axe du porte-satellites. De plus, le désalignement des dentures des satellites avec les dentures du planétaire interne et du planétaire externe conduisent à une usure prématurée desdites dentures, obligeant à une maintenance régulière augmentant les coûts d'exploitation de la turbomachine.

Dans la technique actuelle, une solution pour réduire ce phénomène de surcharge consiste à appairer les pivots portant les satellites et les alésages du porte-satellites lors de l'usinage et du montage des pièces. L'appairage consiste à définir des couples, pivot-alésage, de sorte que le pivot et l'alésage d'un couple sont destinés à être assemblés ensemble. Une conséquence d'un tel appairage est que les pivots de deux couples ne sont pas interchangeables.

L'appairage complexifie la gestion des stocks de pièces lors de l'assemblage ou la maintenance des trains épicycloïdaux. De plus, les opérations d'appairage sont contraignantes puisqu'elles nécessitent des tâches préalables complexes à l'assemblage des éléments constitutifs du porte-satellites, ce qui entraine des coûts de production élevés, et rendent les opérations de maintenance plus complexes.

L'invention a notamment pour but de réduire les défauts de positionnement des satellites dans le porte-satellites de manière simple, efficace et économique, sans avoir à recourir à l'appairage des pièces ni à modifier les tolérances de fabrication du porte-satellites et des pivots qui pourraient augmenter de manière importante les coûts de fabrication.

### RESUME DE L'INVENTION

A cet effet, la présente invention concerne un procédé d'assemblage pour un train d'engrenages épicycloïdal ou planétaire à partir d'au moins un pivot et d'un porte-satellites comprenant un ou plusieurs alésages, chacun des alésages étant destiné à recevoir un pivot, le procédé comprenant les étapes de la revendication 1.

Les défauts de localisation des alésages sur le porte-satellites ainsi que les défauts de concentricité des pivots contribuent au décalage tangentiel de l'axe réel de rotation par rapport à l'axe théorique.

Ainsi, bien que les pivots et les alésages présentent individuellement des axes de rotation réels excentrés par rapport à leurs axes de rotation théoriques, l'assemblage selon le procédé de l'invention permet de minimiser l'excentricité des axes de rotation résultant des ensembles pivot-alésage.

L'orientation du pivot dans le porte-satellites lors de l'étape de montage e) de manière à ce que les vecteurs *̅U̅*̅ et *̅V̅*̅ ne soient pas disposés dans le même secteur angulaire, permet aux excentricités des axes réels de rotation du pivot et de l'alésage de se compenser en partie.

L'orientation des pièces lors du montage permet alors de corriger le défaut de position tangentiel relatif entre les satellites, et par conséquent, de réduire le phénomène de surcharge des satellites des pivots et des alésages, sans pour autant modifier les tolérances de fabrication des alésages du porte-satellites et des pivots.

Ce procédé, ne nécessitant pas d'appairage, permet en outre l'interchangeabilité des pièces lors du montage ou des opérations de maintenance. Ainsi, quel que soit le pivot monté dans un des alésages, l'orientation du pivot dans l'alésage, avec le procédé selon l'invention, permet de réduire le défaut résultant de l'ensemble pivot-alésage.

L'étape e) du procédé peut en outre être réalisée au moyen d'un dispositif de mise en position comprenant des moyens de couplage complémentaires sur les pivots et sur le porte-satellites.

Le dispositif de mise en position permet d'orienter le pivot et de le fixer dans l'alésage dans une orientation souhaitée lors du montage.

Les moyens de couplage peuvent comprendre des premiers moyens de couplage par coopération de forme portés par le porte-satellites et des seconds moyens de couplage par coopération de forme portés par les pivots.

De cette manière, lors du montage d'un pivot dans un alésage, les premiers moyens de couplage portés par le porte-satellites coopèrent avec les seconds moyens de couplage portés par le pivot, afin que ce dernier soit orienté dans l'alésage de sorte à ce que les excentricités du pivot et de l'alésage s'annulent au moins en partie.

Les premiers moyens de couplage par coopération de forme peuvent comprendre un premier organe en saillie agencé dans le secteur angulaire *jₗ* et dans lequel les seconds moyens de couplage par coopération de forme comprennent une ouverture d'introduction dudit premier organe.

Le premier organe peut être apte à être disposé dans k perçages chacun disposé en périphérie d'un alésage et dans un secteur *jₗ*, et dans lequel l'étape d) comprend en outre l'étape suivante :
- insérer le premier organe dans le *l*-ième perçage positionné dans le secteur angulaire *jₗ*.

Chaque secteur angulaire de chaque pivot peut comprendre un second moyen de couplage formé dans une excroissance radiale *E_{q}* du pourtour du pivot, l'étape c) comprend la réalisation d'un détrompage au montage de l'ouverture de l'excroissance radiale *E_{q}* dans ledit organe du secteur *jₗ*. La réalisation du détrompage consiste à supprimer les excroissances radiales qui ne sont pas comprises dans le secteur angulaire *i_{q}* identifié.

Ainsi, une fois les étapes c) et d) du procédé selon l'invention réalisées, chaque alésage comprend un organe porté par le porte-satellites et situé dans le secteur angulaire *jₗ* comprenant le vecteur *̅U̅*̅ et chaque pivot comprend une excroissance radiale *E_{q}* comprenant une ouverture, apte à coopérer avec l'organe. L'excroissance radiale *E_{q}* est située dans le secteur angulaire *i_{q}* comprenant le vecteur -*V̅.* De cette manière, les secteurs angulaires *jₗ* et *i_{q}* respectivement pour chacun des alésages et pour chacun des pivots sont visuellement identifiés. On peut de plus facilement en déduire les secteurs angulaires où sont positionnés les axes réels des alésages et des pivots.

L'étape d) peut comprendre en outre l'étape suivante :
- orienter le pivot de sorte à insérer le premier organe porté par le porte-satellites dans l'ouverture de l'excroissance radiale *E_{q}* restante portée par le pivot.

Ainsi, en montant le pivot de sorte à insérer l'organe dans l'ouverture de l'excroissance radiale *E_{q}* restante du pivot, on s'assure de monter le pivot dans l'alésage en l'orientant de sorte à superposer les secteurs angulaires identifiés *jₗ* et *i_{q}* respectivement de l'alésage et du pivot.

En superposant les secteurs angulaires *jₗ* et *i_{q},* les vecteurs *U̅* et *V̅* ne sont pas disposés dans le même secteur angulaire, ce qui signifie que le défaut de position des axes réels du pivot et de l'alésage se compensent, au moins en partie.

De plus, la coopération de l'organe et de l'ouverture de l'excroissance radiale *E_{q}* permet de réduire les erreurs d'orientation lors du montage du pivot dans l'alésage.

Ce procédé est une solution industriellement viable, permettant, par ailleurs, d'éviter l'appairage des alésages d'un porte-satellites et des pivots associés.

Les pivots et alésages sont respectivement divisés en *n* et *k* secteurs angulaires tel que n peut être supérieur ou égal à *k.*

Ainsi, lorsque n est supérieur à *k,* la position de l'axe de rotation réel est plus précisément identifiée sur le pivot tout en évitant de découper l'alésage en autant de secteurs angulaires. Comme évoqué précédemment, chacun des secteurs angulaires des alésages comprennent des perçages disposés en périphérie des alésages sur le porte-satellites. De tels perçages en grand nombre sur le porte-satellites peuvent contribuer à son affaiblissement mécanique. Par conséquent, en limitant le nombre de secteurs angulaires *k* tel que n est supérieur à k, l'affaiblissement mécanique du porte-satellites résultant de la formation des perçages est ainsi réduit et mieux contrôlé.

Dans un exemple pratique de réalisation de l'invention, n et *k* peuvent être compris entre 3 et 8, bornes incluses.

L'invention concerne également un train d'engrenages épicycloïdal ou planétaire susceptible d'être obtenu par le procédé tel que décrit précédemment.

En outre, l'invention porte sur un train d'engrenages épicycloïdal comprenant les caractéristiques de la revendication 11.

Par exemple, les moyens de couplage des alésages peuvent comprendre un organe en saillie.

Également, les moyens de couplage des pivots peuvent comprendre une ouverture, ayant une forme apte à recevoir avec les moyens de couplage des alésages.

Par ailleurs, l'ouverture est formée dans une excroissance radiale *E_{q}* portée par le pivot et est apte à recevoir ledit organe en saillie.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est un schéma de face d'un train d'engrenages, vu de face, axialement depuis l'amont ;
- la figure 2 est un schéma longitudinal d'une turbomachine ;
- la figure 3 est une vue schématique d'un porte-satellites selon l'invention ;
- la figure 4 est une vue de coupe d'un pivot monté dans un alésage d'un porte-satellites ;
- la figure 5 est une vue schématique d'un pivot selon l'invention avant l'identification du secteur angulaire *i_{q} ;*
- la figure 6 est une vue schématique d'un pivot pour lequel le secteur *i_{q}* est identifié ;
- les figures 7a, 7b et 7c illustrent respectivement les étapes du procédé selon l'invention ;
- la figure 8 est une vue schématique d'un train d'engrenages susceptible d'être obtenue par le procédé selon l'invention.

### DESCRIPTION DETAILLEE

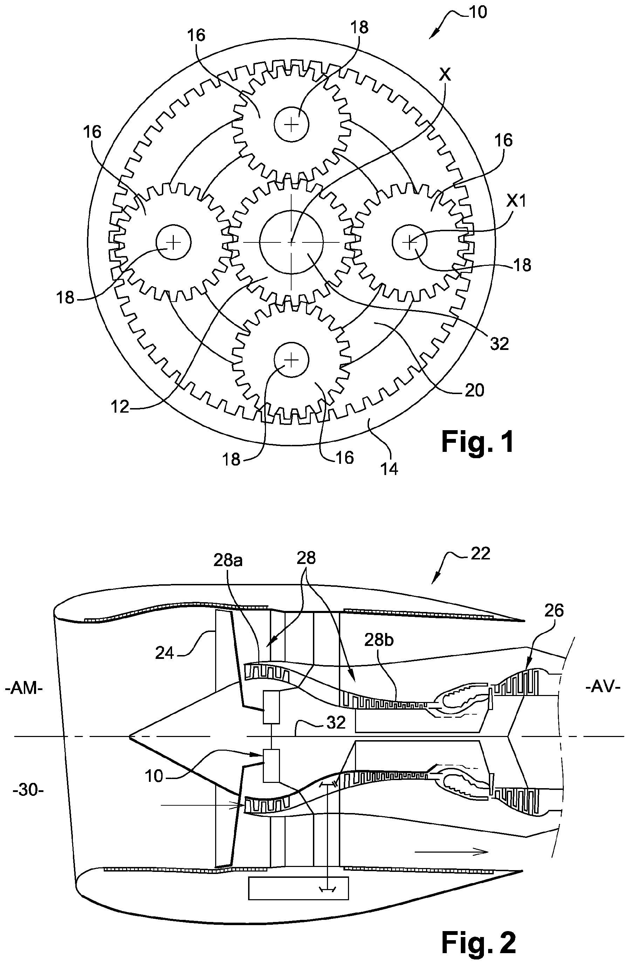

La figure 1 illustre schématiquement la structure d'un train d'engrenages épicycloïdal ou planétaire 10. Ce type de train d'engrenages 10 comprend classiquement un planétaire interne 12 (également appelé pignon central, soleil ou solaire) et un planétaire externe 14 (également appelé couronne extérieure), les deux planétaires étant coaxiaux. Le planétaire interne 12 peut être mobile en rotation autour de son axe X, le planétaire externe 14 pouvant être fixe, ou couplé en rotation à une hélice comme dans le cas d'un turbopropulseur ou à une roue de soufflante comme dans le cas d'un turboréacteur à double flux. Le train d'engrenages 10 comporte en outre des satellites, ou pignons satellites 16 montés de façon mobile en rotation sur des pivots 18 d'un porte-satellites 20. Chaque satellite 16 engrène simultanément avec le planétaire interne 12 et avec le planétaire externe 14. Le porte-satellites 20 est fixe ou pivotant autour de l'axe X du planétaire interne 12 et du planétaire externe 14. L'entrée peut être formée par le planétaire interne 12, et la sortie formée par le porte-satellites 20.

Dans un autre exemple, le porte-satellites 20 peut être fixe ou couplé en rotation à une hélice d'un turbopropulseur ou à une roue de soufflante d'un turboréacteur à double flux.

La figure 2 illustre schématiquement une turbomachine 22 pour aéronef dans laquelle des trains d'engrenages 10 sont utilisés en tant que réducteurs de vitesse pour réduire la vitesse de rotation d'un rotor, tel qu'une soufflante 24, indépendamment de la vitesse de rotation d'au moins une turbine 26 couplée axialement en aval à au moins un compresseur 28 dont la turbomachine est aussi équipée. A partir de l'entrée d'air frontale 30, la soufflante 24, puis le compresseur 28 sont traversés par de l'air.

Le pignon central, ou planétaire interne 12, entoure et est alors solidaire en rotation de l'arbre 32 du compresseur 28 comme illustré par exemple par les figures 1 et 2. Le train d'engrenages 10 peut en particulier être monté dans une enceinte annulaire formée radialement à l'intérieur d'un compresseur basse pression 28a agencé en aval de la roue de soufflante 24 et en amont d'un compresseur haute pression 28b comme visible sur la figure 2.

Comme cela est visible en considérant la figure 1, l'alignement des dentures des satellites avec les dentures des planétaires interne 12 et externe 14 est nécessaire au bon fonctionnement du train d'engrenages 10 et pour limiter les opérations de maintenance.

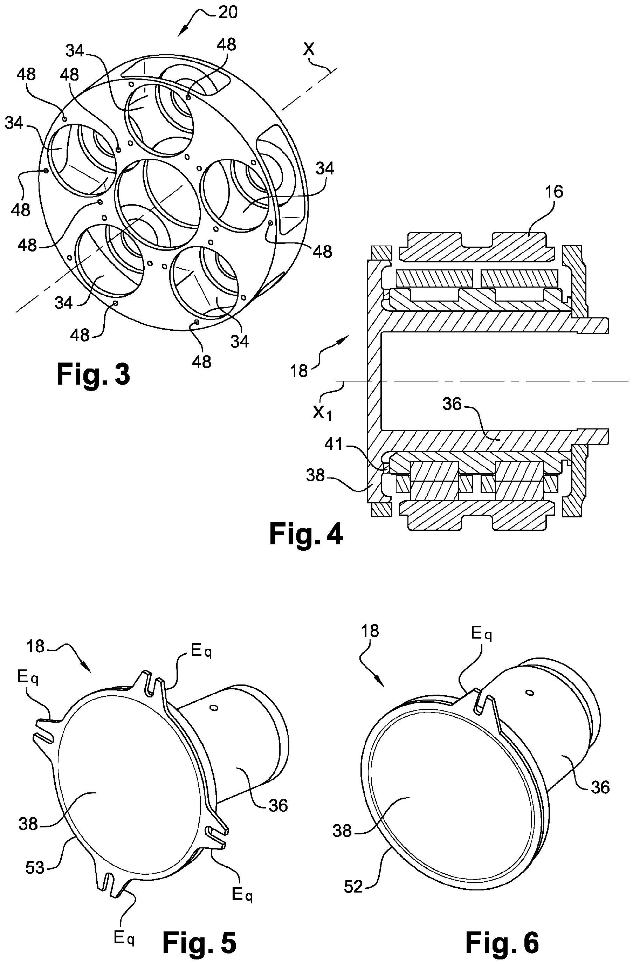

Un mauvais positionnement des satellites 16 dans les alésages 34 du porte-satellites 20, visibles sur la figure 3, implique un désalignement des dentures des satellites 16 avec la denture du planétaire interne 12 et la denture du planétaire externe 14. Il s'ensuit une disparité de la puissance transitant par les satellites 16 conduisant à une usure précoce des dentures.

Il est donc nécessaire de fournir une solution permettant de réduire autant que possible le désalignement des satellites 16 lors du montage de tels trains d'engrenages 10.

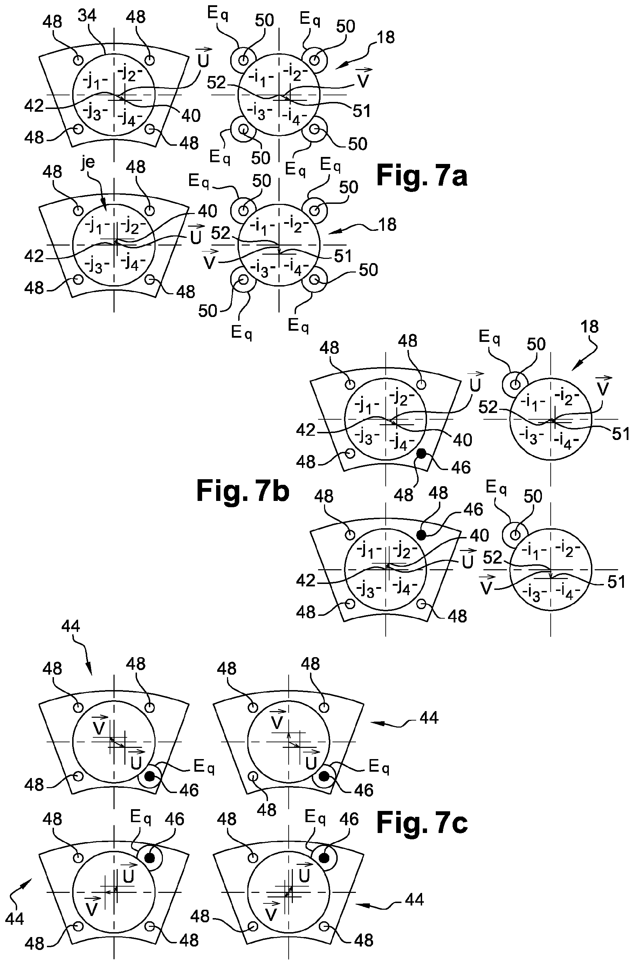

Pour cela, comme illustré sur les figures 7a, 7b, et 7c, un procédé d'assemblage pour trains d'engrenages 10 est proposé. Le montage peut être effectué à partir d'au moins un pivot 18 et d'un porte-satellites 20 comprenant un ou plusieurs alésages 34.

La figure 3 illustre un exemple de porte-satellites 20 selon l'invention, à partir duquel est assemblé un train épicycloïdal. Il comprend cinq alésages 34 régulièrement répartis autour de l'axe X et dimensionnés de sorte à ce qu'un pivot 18 puisse y être monté. Un exemple de pivot 18 est visible sur la figure 5. Le pivot 18 comprend un axe 36, dont le diamètre est dimensionné de sorte à pouvoir être agencé dans les alésages 34 du porte-satellites 20. L'axe 36 est globalement cylindrique ou tronconique, dont une des extrémités est prolongée par une partie de liaison annulaire 38 s'étendant radialement vers l'extérieur (figure 4).

Le montage d'un pivot 18 dans un alésage 34 d'un porte-satellites 20 est par ailleurs visible sur la figure 4. L'axe 36 du pivot 18 est agencé à l'intérieur de l'alésage 34 du porte-satellites 20 de sorte que la partie de liaison 38 vienne en appui sur la surface 41 du porte-satellites en périphérie de l'alésage. L'axe du pivot 36 est en libre rotation dans l'alésage 34.

Dans l'exemple illustré par les figures 7a, 7b, et 7c, le procédé est appliqué à deux alésages 34, d'un même porte-satellites 20 ou deux portes-satellites distincts 20, et à deux pivots 18.

La première étape du procédé consiste à mesurer la position d'un axe de rotation réel 51 de chacun des pivots 18 et la position d'un axe réel 40 de chacun des alésages 34 du ou des portes-satellites. Comme illustré sur la figure 7a, la mesure, lors de cette première étape, permet connaître la position de l'axe de rotation réel 51 (figure 4) par rapport à l'axe de rotation théorique 52 de chacun des pivots 18 et la position de l'axe réel 40 par rapport à l'axe théorique 42 de chacun des alésages 34.

Pour les alésages 34, l'excentricité de l'axe réel 40 par rapport à l'axe théorique 42 résulte en partie de défaut de fabrication impactant notamment la position des alésages 34 dans le porte-satellites. Dans le cas des pivots 18, cette excentricité s'explique par des défauts de fabrication impactant notamment la concentricité des pivots 18.

La mesure de la position tridimensionnelle des axes réels, respectivement des pivots et des alésages, est réalisée à l'aide d'une machine dédiée. Cette machine permet, par palpation de la circonférence de l'alésage et du pivot, de déterminer, par calcul, la position réelle du centre et donc de l'axe de rotation réel du pivot et de l'axe réel de l'alésage.

La première étape permet ainsi de connaitre la position relative de l'axe réel 40 par rapport à l'axe théorique 42 des alésages 34 ainsi que la position de l'axe de rotation réel 51 par rapport à l'axe de rotation théorique 52 des pivots 18 à assembler.

Pour caractériser les positions relatives des axes réels 40, 51 par rapport aux axes théoriques 42, 52 pour chacun des alésages et des pivots, on définit respectivement des vecteurs *̅U̅*̅ et *V̅* dans une troisième et quatrième étape, également illustré par les figures 7a, 7b et 7c.

Pour chaque alésage 34, un vecteur *̅U̅*̅ est défini. Le vecteur *̅U̅*̅ est orienté de l'axe théorique 42 vers l'axe réel 40 et a une norme égale à la distance entre l'axe théorique de rotation 42 et l'axe réel 40 de l'alésage 34.

De manière similaire, pour chaque pivot 18 un vecteur *̅V̅*̅ est défini. Le vecteur *̅V̅*̅ est orienté de l'axe théorique de rotation 52 vers l'axe réel de rotation et 51 a une norme égale à la distance entre l'axe théorique de rotation 52 et l'axe réel de rotation 51 du pivot 18.

Dans une réalisation pratique, compatible avec l'industrialisation des pièces, le procédé comprend une deuxième étape consistant à diviser régulièrement et indépendamment les pivots 18 en plusieurs secteurs angulaires égaux et les alésages 34 du porte-satellites 20 en plusieurs secteurs angulaires égaux autour de leurs axes théoriques respectifs 42. Ainsi, les pivots 18 et les alésages 34 sont indépendamment divisés régulièrement en n et *k* secteurs angulaires s'étendant autour de leurs axes théoriques 42 respectifs, n et *k* pouvant être égaux, comme le cas illustré par les figures 7a, 7b et 7c où n = *k* = 4.

Cette division en secteurs angulaires, permet de localiser dans quelle secteur angulaire de la pièce se trouvent les vecteurs *U̅* et *V̅* et donc les axes de rotation réels 51 des pivots 18 et les axes réels 40 des alésages 34. On peut ensuite en déduire les sens d'orientation de chacun des alésages et de chacun des pivots.

Une telle division en secteurs angulaires permet en outre d'identifier dans les troisième et quatrième étapes les secteurs angulaires *i_{q}* et *jₗ*, respectivement pour chaque pivot 18 et chaque alésage 34, comprenant respectivement les vecteurs -*̅V̅*̅ et *U̅.*

La cinquième étape du procédé, illustrée par la figure 7c, consiste à monter un des pivots 18 dans l'alésage 34 et l'orienter angulairement dans celui-ci tel que pour chaque montage 44 les secteurs angulaires identifiés *jₗ* et *i_{q}* se superposent. En d'autres termes, le pivot 18 est monté et orienté dans un des alésages 34 de sorte que les axes de rotation réels 51 du pivot 18 et les axes réels 40 de l'alésage 34 du montage 44, définis les vecteurs *̅U̅*̅ et *V̅,* se compensent au moins en partie.

Pour cela, le pivot 18 est orienté de sorte que les secteurs angulaires identifiés *jₗ* et *i_{q}* se superposent.

Comme cela est visible sur la figure 7c, l'assemblage des pivots 18 peut être réalisé indifféremment dans les deux alésages 34. Toutefois, lors du montage 44, le pivot 18 est monté tel que les vecteurs *̅U̅*̅ et *̅V̅*̅ ne soient pas dans le même secteur angulaire, c'est-à-dire afin que les secteurs angulaires identifiés *jₗ* et *i_{q}* se superposent.

Ce procédé ne nécessite pas d'appairage de pièces, de sorte que les pivots 18 peuvent être montés dans tous les alésages 34 à condition que l'orientation du pivot 18 soit respectée.

En pratique, la cinquième étape du procédé est réalisée au moyen d'un dispositif de mise en position. Le dispositif de mise en position comprend des moyens de couplage complémentaires sur les pivots 18 et sur le porte-satellites 20. Le dispositif de mise en position permet d'orienter le pivot 18 dans l'alésage 34 du porte-satellites 20 et de le fixer dans l'orientation souhaitée lors du montage. En pratique, on comprendra ci-après que le dispositif réalise un détrompage au montage d'un pivot 18 dans un alésage 34, évitant un montage d'une manière inappropriée d'un pivot 18 dans un alésage 34 qui conduirait, au contraire du résultat souhaité, à une augmentation des désalignements des dentures.

Comme cela est visible sur les figures 7a, 7b et 7c, les moyens de couplage comprennent des premiers moyens de couplage par coopération de forme portés par le porte-satellites. Ces premiers moyens de couplage comprennent un premier organe 46 apte à être disposé en saillie dans des perçages 48 disposés en périphérie des alésages 34. En particulier, les perçages 48 sont agencés de manière qu'il n'y ait qu'un perçage 48 par secteur angulaire pour chacun des alésages 34 du porte-satellites 20 tel qu'illustré sur la figure 3.

Pour chacun des alésages 34, la quatrième étape du procédé comprend en outre une étape consistant à insérer le premier organe 46 dans le perçage 48 positionné dans le secteur angulaire *jₗ*, qui comprend par ailleurs le vecteur *̅U̅*̅ pour chacun des alésages 34. Cette étape permet ainsi, pour chaque alésage 34, d'identifier visuellement le secteur angulaire où se trouve l'axe de réel 40 de l'alésage 34, et d'y disposer un moyen de couplage qui aidera par la suite au montage « orienté » du pivot 18 dans l'alésage 34, c'est-à-dire dans une position angulaire conduisant à une réduction des désalignements des dentures. Sur la figure 7b, qui illustre en partie cette étape, des pions sont disposés dans les secteurs angulaires j₂ et j₄ comprenant le vecteur *̅U̅*̅ de ces deux alésages 34.

Comme illustré sur les figures 7a, 7b et 7c, les moyens de couplage comprennent des seconds moyens de couplage par coopération de forme portés par les pivots 18. Les seconds moyens de couplage par coopération de forme comprennent une ouverture d'introduction 50, de sorte qu'un premier organe 46, par exemple un pion, puisse être agencé à l'intérieur de cette ouverture d'introduction 50. En particulier, comme illustré par la figure 5, chaque pivot comprend des seconds moyens de couplage qui sont des excroissances radiales *E_{q}* du pourtour 53 du pivot 18. Les excroissances radiales *E_{q}* du pourtour 53 des pivots 18 sont disposées sur la partie de liaison 38, en périphérie de celle-ci. En particulier, ces excroissances radiales *E_{q}* sont agencées de manière à ce qu'il n'y ait qu'une excroissance *E_{q}* par secteur angulaire pour chacun des pivots 18 comme sur la figure 7a.

Pour chaque pivot 18, la troisième étape du procédé comprend en outre la réalisation d'un détrompage au montage de l'ouverture de l'excroissance radiale *E_{q}* dans ledit organe 46 du secteur *jₗ*.Ce détrompage consiste à usiner les excroissances radiales E_{q} qui ne sont pas comprises dans le secteur angulaire *i_{q}* identifié, comprenant le vecteur -*V̅.* Cette étape permet ainsi pour chaque pivot 18 d'identifier visuellement le secteur angulaire situé en direction opposée au secteur angulaire dans lequel se trouve l'axe de rotation réel 51 du pivot 18, et d'y disposer un moyen de couplage qui facilitera par la suite le montage « orienté » du pivot 18 dans l'alésage 34. Suite à l'usinage, les pivots 18 ne comprennent plus qu'une excroissance radiale comme visible sur la figure 6.

Suite aux troisième et quatrième étapes du procédé, comme illustré figure 7b, les pions 46, les premiers moyens de couplage par coopération de forme portés par les porte-satellites et les excroissances radiales restantes *E_{q}*, les seconds moyens de couplage par coopération de forme portés par les pivots, permettent d'identifier, directement ou indirectement, la position et l'orientation des vecteurs *̅U̅*̅ et *V̅.*

La cinquième étape comprend, dans une réalisation pratique du procédé, une étape consistant à orienter le pivot 18 de sorte à insérer le premier organe 46 en saillie porté par le porte-satellites 20 dans l'ouverture de l'excroissance radiale *E_{q}* restante portée par le pivot 18. Comme cela est visible sur la figure 7c, l'orientation du pivot 18 dans l'alésage 34 de sorte à faire coopérer le pion 46 de l'alésage 34 avec l'excroissance radiale *E_{q}* restante du pivot 18 permet d'assurer que l'axe réel de rotation 51 du pivot 18 et l'axe réel 40 de l'alésage 34 ne soient pas disposés dans le même secteur angulaire.

En superposant les secteurs angulaires *jₗ* et *i_{q}* visuellement identifiés sur chacun des alésages 34 et des pivots 18, on s'assure que lors du montage que *̅U̅*̅ et *̅V̅*̅ sont disposés tel que l'axe réel de rotation 51 du pivot 18 et l'axe réel 40 de l'alésage 34 du montage 44, se compensent au moins en partie.

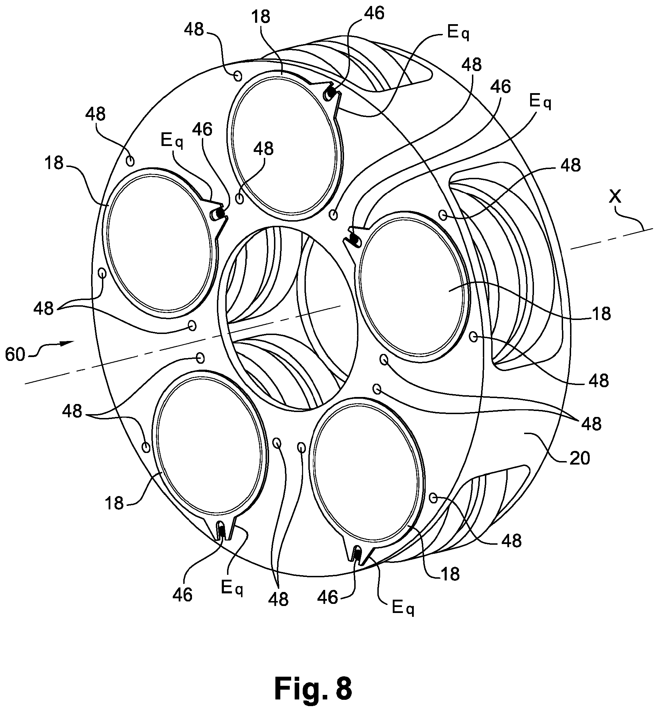

Comme cela est visible sur la figure 8, le procédé permet d'obtenir un train épicycloïdal 60, dans lequel les pivots 18 sont orientés dans les alésages 34, à l'aide de la coopération entre les excroissances radiales *E_{q}* restantes des pivots 18 et les pions 46 disposés autour des alésages 34.

Comme illustré sur la figure 7c, les pivots 18 sont interchangeables : ils peuvent être montés indifféremment dans les deux alésages 34, à condition que les pivots 18 soient correctement orientés à l'aide de leur excroissance radiale *E_{q}* restante.

Dans le cas particulier où, pour un alésage 34, le vecteur *̅U̅*̅ est positionné sur la frontière entre deux secteurs angulaires, on choisit aléatoirement un des deux secteurs comme étant le secteur comprenant le vecteur *U̅.* De même pour un pivot 18, lorsque le vecteur -*̅V̅*̅ est positionné sur la frontière entre deux secteurs angulaires, on choisit aléatoirement un des deux secteurs comme étant le secteur comprenant le vecteur -*̅V̅*̅.Selon une forme de réalisation de l'invention, les pivots 18 et les alésages 34 sont respectivement en *n* et *k* secteurs angulaires tel que *n* peut être supérieur ou égal à *k.*

Selon une autre forme de réalisation *n* et *k* peuvent être compris entre 3 et 8, bornes incluses.

En particulier, en limitant le nombre de secteurs angulaires des alésages 34, on limite également le nombre de perçage 48 en périphérie des alésages 34 sur les porte-satellites 20. Cela permet de limiter et de contrôler l'affaiblissement du porte-satellites 20 par les perçages 48.

## Revendications

1. Procédé d'assemblage pour un train d'engrenages épicycloïdal ou planétaire (10) à partir d'au moins un pivot (18) et d'un porte-satellites (20) comprenant un ou plusieurs alésages (34), chacun des alésages (34) étant destiné à recevoir un pivot (18), le procédé **caractérisé en ce qu'**il comprend les étapes suivantes :
a) mesurer la position d'un axe de rotation réel (51) de chacun dudit au moins un pivot (18) et la position d'un axe réel (40) de chacun desdits un ou plusieurs alésages (34) du porte-satellites (20);
b) diviser chacun desdits pivots (18) en n secteurs angulaires *i*₁ *...i_{q}* ...*iₙ* s'étendant autour d'un axe de rotation théorique (52) dudit pivot et diviser chacun desdits alésages (34) du porte-satellites (20) en *k* secteurs angulaires *j*₁ *...jₗ* ...*jₖ* s'étendant autour d'un axe théorique (42) dudit alésage (34);
c) pour chaque pivot (18) définir un vecteur *̅V̅*̅ orienté de l'axe de rotation théorique (52) vers l'axe de rotation réel (51), et identifier le secteur angulaire *i_{q}* comprenant le vecteur *-V̅* ;
d) pour chaque alésage (34) définir un vecteur *̅U̅*̅ orienté de l'axe théorique (42) vers l'axe réel (40), et identifier le secteur angulaire *jₗ* comprenant le vecteur *̅U̅*̅;
e) pour chaque alésage (34) du porte-satellites (20), monter un pivot (18) tel que pour chaque montage (44) les secteurs angulaires identifiés *jₗ* et *i_{q}* se superposent.

2. Procédé selon la revendication 1, dans lequel l'étape e) est réalisée au moyen d'un dispositif de mise en position comprenant des moyens de couplage complémentaires sur les pivots et sur le porte-satellites.

3. Procédé selon la revendication 2, dans lequel les moyens de couplage comprennent des premiers moyens de couplage par coopération de forme portés par le porte-satellites (20) et des seconds moyens de couplage par coopération de forme portés par les pivots (18).

4. Procédé selon la revendication 3, dans lequel les premiers moyens de couplage par coopération de forme comprennent un premier organe (46) en saillie agencé dans le secteur angulaire *jₗ* et dans lequel les seconds moyens de couplage par coopération de forme comprennent une ouverture d'introduction (50) dudit premier organe.

5. Procédé selon la revendication 4, dans lequel le premier organe (46) est apte à être disposé dans k perçages (48) chacun disposé en périphérie d'un alésage (34) et dans un secteur *jₗ*, et dans lequel l'étape d) comprend en outre l'étape suivante :
- insérer le premier organe (46) dans le *l*-ième perçage (48) positionné dans le secteur angulaire *jₗ*.

6. Procédé selon la revendication 4 ou 5, dans lequel chaque secteur angulaire de chaque pivot (18) comprenant un second moyen de couplage formé dans une excroissance radiale *E_{q}* du pourtour (53) du pivot (18), l'étape c) comprend la réalisation d'un détrompage au montage de l'ouverture (50) de l'excroissance radiale *E_{q}* dans ledit organe (46) du secteur *jₗ*.

7. Procédé selon la revendication 6, dans lequel la réalisation du détrompage consiste à supprimer les excroissances radiales *E_{q}* qui ne sont pas comprises dans le secteur angulaire *i_{q}*.

8. Procédé selon la revendication 7, dans lequel l'étape d) comprend en outre l'étape suivante :
- orienter le pivot (18) de sorte à insérer le premier organe (46) porté par le porte-satellites (20) dans l'ouverture (50) de l'excroissance radiale *E_{q}* restante portée par le pivot (18).

9. Procédé selon l'une des revendications 1 à 8, dans lequel n est supérieur ou égal à *k.*

10. Procédé selon l'une des revendications 1 à 9, dans lequel n et *k* sont compris entre 3 et 8, bornes incluses.

11. Train d'engrenages épicycloïdal (60) susceptible d'être obtenu par le procédé selon l'une des revendications 1 à 10.

12. Train d'engrenages épicycloïdal (60) selon la revendication 11, comprenant un porte-satellites (20) comportant des alésages (34) dans lesquels sont agencés des pivots (18), les alésages (34) et les pivots (18) comprenant des moyens de couplage aptes à coopérer ensemble afin maintenir le pivot (18) selon une orientation prédéterminée dans l'alésage (34), lesdits moyens de couplage des alésages (34) et des pivots (18) étant respectivement disposés dans un secteur angulaire comprenant un vecteur *̅U̅*̅ orienté à partir d'un axe théorique (42) vers un axe réel (40) et dans un secteur angulaire comprenant un vecteur -*̅V̅*̅, le vecteur *̅V̅*̅ étant orienté à partir d'un axe théorique (52) vers un axe réel (51).

13. Train d'engrenages selon la revendication 12, **caractérisé en ce que** les moyens de couplage des alésages (34) comprennent un organe (46) en saillie.

14. Train d'engrenages selon la revendication 13, **caractérisé en ce que** les moyens de couplage des pivots (18) comprennent une ouverture (50), ayant une forme apte à recevoir avec les moyens de couplage des alésages (34).

15. Train d'engrenages épicycloïdal (60) selon la revendication 14, **caractérisé en ce que** l'ouverture (50) est formée dans une excroissance radiale *E_{q}* portée par le pivot (18) et est apte à recevoir ledit organe (46) en saillie.

## Patentansprüche

1. Verfahren für den Zusammenbau eines Planetengetriebes (10) aus mindestens einem Zapfen (18) und einem Planetenträger (20) mit einer oder mehreren Bohrungen (34), wobei jede der Bohrungen (34) dazu bestimmt ist, einen Zapfen (18) aufzunehmen, **dadurch gekennzeichnet, dass** es die folgenden Schritte umfasst:
a) das Messen der Position einer tatsächlichen Drehachse (1) des mindestens einen Zapfens (18) und der Position einer tatsächlichen Achse (40) einer oder mehrerer Bohrungen (34) des Planetenträgers (20);
b) das Unterteilen jedes Zapfens (18) in n Winkelsektoren *i₁*... *i_{q}... iₙ,* die sich um eine theoretische Drehachse (52) des Zapfens erstrecken, und das Unterteilen jeder der Bohrungen (34) des Planetenträgers (20) in k Winkelsektoren *jₗ*... *jₗ*... *jₖ*, die sich um die theoretische Achse (52) der Bohrung (34) erstrecken;
c) bei jedem Zapfen das Bestimmen eines Vektors v (18), der von der theoretischen Achse (52) zur tatsächlichen Achse (51) führt, und das Ermitteln des Winkelsektors *i_{q}* mit dem Vektor - v^{→}.
d) bei jeder Bohrung (34) das Bestimmen eines Vektors U^{→}, der von der theoretischen Achse (42) zur realen Achse (40) führt, und das Ermitteln des Winkelsektors *jₗ* mit dem Vektor U^{→};
e) bei jeder Bohrung (34) des Planetenträgers (20) die Montage einen Zapfens (18) dergestalt, dass die ermittelten Winkelsektoren *jₗ* und *i_{q}* bei jeder Montage (44) übereinander liegen.

2. Verfahren nach Anspruch 1, in dem Schritt e) mit einer Positioniervorrichtung durchgeführt wird, die komplementäre Kopplungsmittel an den Zapfen und an der Planetenträgern umfasst.

3. Verfahren nach Anspruch 2, in dem die Kopplungsmittel erste, vom Planetenträger (20) getragene formschlüssige Kopplungsmittel, und zweite, von den Zapfen (18) getragene formschlüssige Kopplungsmittel umfassen.

4. Verfahren nach Anspruch 3, in dem die ersten formschlüssigen Kopplungsmittel ein erstes vorstehendes Element (46) umfassen, das im Winkelsektor *jₗ* angeordnet ist, und in dem die zweiten formschlüssigen Kopplungsmittel eine Einführöffnung (50) für dieses erste Element umfassen.

5. Verfahren nach Anspruch 4, in dem das erste Element (46) in k Bohrungen (48) jeweils am Rand einer Bohrung (34) und in einem Sektor *jₗ* angeordnet werden kann, und in dem Schritt d) darüber hinaus den folgenden Schritt umfasst:
- das Einsetzen des ersten Elements (46) in die l-te Bohrung (48), die sich im Winkelsektor *jₗ* befindet.

6. Verfahren nach Anspruch 4 oder 5, in dem jeder Winkelsektor eines Zapfens (18) ein zweites Kopplungsmittel umfasst, das in einer radialen Auswölbung *E_{q}* am Umfang (53) des Zapfens (18) ausgebildet ist, wobei Schritt c) die Herstellung eines Verwechslungsschutzes an der Öffnung (50) für das Einsetzen der radialen Auswölbung *E_{q}* in das Element (46) des Sektors *jₗ* umfasst.

7. Verfahren nach Anspruch 6, in dem die Herstellung des Verwechslungsschutzes darin besteht, die nicht im Winkelsektor *jₗ* enthaltenen radialen Vorsprünge *E_{q}* zu beseitigen.

8. Verfahren nach Anspruch 7, in dem Schritt d) darüber hinaus folgenden Schritt umfasst:
- die Ausrichtung des Zapfens (18) dergestalt, dass das vom Planetenträger (20) getragene erste Element (46) in die Öffnung (50) der vom Zapfen (18) getragenen verbleibenden radialen Auswölbung *E_{q}* eingeführt werden kann.

9. Verfahren nach einem der Ansprüche 1 bis 8, in dem n größer /gleich k ist.

10. Verfahren nach einem der Ansprüche 1 bis 9, in dem n und k zwischen 3 bis einschließlich 8 liegen.

11. Planetengetriebe (60), das nach dem Verfahren gemäß einem der Ansprüche 1 bis 10 hergestellt werden kann.

12. Planetengetriebe (60), das einen Planetenträger (20) mit Bohrungen (34) umfasst, in denen Zapfen (18) angeordnet sind, wobei die Bohrungen (34) und die Zapfen (18) Kopplungsmittel umfassen, die zusammenwirken können, um den Zapfen (18) in einer bestimmten Ausrichtung in der Bohrung (34) zu halten, **dadurch gekennzeichnet, dass** die Kopplungsmittel der Bohrungen (34) und Zapfen (18) jeweils in einem Winkelsektor mit einem Vektor U^{→} angeordnet sind, der von einer theoretischen Achse (52) zu einer tatsächlichen Achse (54) führt, und in einem Winkelsektor mit einem Vektor - v^{→}, wobei der Vektor v^{→} von einer theoretischen Achse (48) zu einer tatsächlichen Achse (46) führt.

13. Getriebe nach Anspruch 12, **dadurch gekennzeichnet, dass** die Kopplungsmittel der Bohrungen (34) ein vorstehendes Element (46) umfassen.

14. Getriebe nach Anspruch 13, **dadurch gekennzeichnet, dass** die Kopplungsmittel der Zapfen (18) eine Öffnung (50) umfassen, die so geformt ist, dass die Kopplungsmittel der Bohrungen (34) darin aufgenommen werden können.

15. Planetengetriebe (60) nach Anspruch 14, **dadurch gekennzeichnet, dass** die Öffnung (50) in einer radialen Auswölbung *E_{q}* auf dem Zapfen (18) ausgebildet ist und das vorstehende Element (46) aufnehmen kann.

## Claims

1. A process for the assembly of an epicyclic or planetary gear train (10) from at least one pivot (18) and a planet gear carrier (20) comprising one or more bores (34), each of the bores (34) being intended to receive a pivot (18), the process comprising the following steps:
a) measuring the position of a real axis of rotation (51) of each of said at least one pivot (18) and the position of a real axis of rotation (40) of each of said one or more bores (34) of the carrier (20);
b) dividing each of said pivots (18) into n angular sectors *i*ₗ ... *i_{q}* ... *iₙ* extending about a theoretical axis of rotation (52) of said pivot and dividing each of said bores (34) of the carrier (20) into *k* angular sectors *j*₁ *...jₗ ...jₖ* extending about the theoretical axis (52) of said bore (34);
c) for each pivot (18), defining a vector *̅V̅*̅ oriented from the theoretical axis (52) to the real axis (51), and identifying the angular sector *i_{q}* including vector -*̅V̅*̅;
d) for each bore (34), defining a vector *̅U̅*̅ oriented from the theoretical axis (40) to the real axis (42), and identifying the angular sector *jₗ* including vector *̅U̅*̅;
e) for each bore (34) of the carrier (20), mounting a pivot (18) such that for each assembly (44) the identified angular sectors *jₗ* and *i_{q}* are superimposed.

2. The process according to claim 1, wherein step e) is carried out by means of a positioning device comprising complementary coupling means on the pivots and on the carrier.

3. The process according to claim 2, wherein the coupling means comprise first form-fitting coupling means carried by the carrier (20) and second form-fitting coupling means carried by the pivots (18).

4. The process according to claim 3, wherein the first form-fitting coupling means comprises a first projecting member (46) arranged in angular sector *jₗ* and wherein the second form- fitting coupling means comprises an opening (50) suitable for receiving said first member.

5. The process according to claim 4, wherein the first member (46) is adapted to be received in k holes (48) each arranged around a bore (34) and in a sector *jₗ*, and wherein step d) further comprises the following step:
- inserting the first member (46) into the *l*-th hole (48) positioned in the angular sector *jₗ*.

6. The process according to claim 4 or 5, wherein each angular sector of each pivot (18) comprising a second coupling means formed by a radial protrusion *E_{q}* at the periphery (53) of the pivot (18), step c) comprising the performance of mistake proofing when mounting the opening (50) of the radial protrusion *E_{q}* in said member (46) of sector *jₗ*.

7. The process according to claim 6, wherein the performance of the mistake proofing consists in removing radial protrusions *E_{q}* that are not included in the angular sector *i_{q}*.

8. The process according to claim 7, wherein step d) further comprises the following steps:
- orienting the pivot (18) so as to insert the first member (46) carried by the carrier (20) into the opening (50) of the remaining radial protrusion *E_{q}* carried by the pivot (18).

9. The process according to one of claims 1 to 8, wherein n is greater than or equal to k.

10. The process according to one of claims 1 to 9, wherein n and *k* are between 3 and 8, including terminals.

11. An epicyclic train gear (60) which can be obtained by the process according to one of claims 1 to 10.

12. An epicyclic gear train (60) comprising a planet gear carrier (20) having bores (34) in which pivots (18) are arranged, the bores (34) and pivots (18) comprising coupling means adapted to cooperate with each other to hold the pivot (18) in a predetermined orientation in the bore (34), **characterized in that** said means for coupling the bores (34) and pivots (18) are respectively arranged in an angular sector comprising a vector *̅U̅*̅ oriented from a theoretical axis (52) to a real axis (54) and in an angular sector comprising a vector -*̅V̅*̅, the vector *̅V̅*̅ being oriented from a theoretical axis (48) to a real axis (46).

13. Gear train according to claim 12, **characterized in that** the coupling means of the bores (34) comprise a projecting member (46).

14. Gear train according to claim 13, **characterized in that** the coupling means of the pivots (18) comprise an opening (50), having a shape suitable for receiving the coupling means of the bores (34).

15. The epicyclic gear train (60) according to claim 14, **characterized in that** the opening (50) is formed in a radial protrusion *E_{q}* carried by the pivot (18) and is adapted to receive said projecting member (46).
